(19) Europäisches Patentamt / European Patent Office / Office européen des brevets

(11) **EP 3 015 497 B1**

(12) **EUROPEAN PATENT SPECIFICATION**

(45) Date of publication and mention of the grant of the patent:
**29.07.2020  Bulletin 2020/31**

(51) Int Cl.:
*C08J 9/18* (2006.01)       *C08L 23/12* (2006.01)
*C08J 9/228* (2006.01)      *C08J 9/00* (2006.01)
*C08J 9/12* (2006.01)        *H01B 1/24* (2006.01)

(21) Application number: **14818301.5**

(22) Date of filing: **17.06.2014**

(86) International application number:
**PCT/JP2014/065983**

(87) International publication number:
**WO 2014/208397 (31.12.2014 Gazette 2014/53)**

(54) **ELECTROCONDUCTIVE POLYPROPYLENE RESIN FOAM PARTICLES HAVING EXCELLENT FLAME RETARDANCY AND ELECTROCONDUCTIVITY AND ELECTROCONDUCTIVE POLYPROPYLENE RESIN IN-MOLD-FOAMED MOLDED ARTICLE**

ELEKTRISCH LEITFÄHIGE POLYPROPYLENHARZSCHAUMTEILCHEN MIT HERVORRAGENDER FEUERBESTÄNDIGKEIT UND ELEKTRISCHER LEITFÄHIGKEIT SOWIE IN EINER FORM GESCHÄUMTER FORMKÖRPER AUS ELEKTRISCH LEITFÄHIGEM POLYPROPYLENHARZ

PARTICULES ÉLECTRO-CONDUCTRICES DE MOUSSE DE RÉSINE DE POLYPROPYLÈNE PRÉSENTANT D'EXCELLENTES PROPRIÉTÉS D'ININFLAMMABILITÉ ET D'ÉLECTRO-CONDUCTIVITÉ ET ARTICLE MOULÉ ÉLECTRO-CONDUCTEUR EXPANSÉ DANS LE MOULE À BASE DE RÉSINE DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2013  JP 2013131500**

(43) Date of publication of application:
**04.05.2016  Bulletin 2016/18**

(73) Proprietor: **Kaneka Corporation**
**Osaka-shi, Osaka 530-8288 (JP)**

(72) Inventor: **MIURA, Shintaro**
**Settsu-shi**
**Osaka 566-0072 (JP)**

(74) Representative: **Vossius & Partner**
**Patentanwälte Rechtsanwälte mbB**
**Siebertstrasse 3**
**81675 München (DE)**

(56) References cited:
**WO-A1-2013/022049       WO-A1-2013/094529**
**JP-A- 2004 175 819       JP-A- 2005 146 017**
**JP-A- 2005 256 007       JP-A- 2013 035 949**
**JP-A- 2013 117 037**

**Description**

Technical Field

The present invention relates to electroconductive polypropylene resin foamed particles and an electroconductive polypropylene resin in-mold foam molded article used for cushioning packaging materials, radio wave absorbers, and other purposes.

Background Art

Polypropylene resin in-mold foam molded articles produced by using polypropylene resin foamed particles have shape arbitrariness, cushioning properties, lightweight properties, heat-insulating properties, and other properties, which are advantages of the in-mold foam molded articles. The polypropylene resin in-mold foam molded articles have better chemical resistance, heat resistance, and strain recovery after compression than those of in-mold foam molded articles produced by using polystyrene resin foamed particles , and have better dimensional accuracy, heat resistance, and compressive strength than those of in-mold foam molded articles produced by using polyethylene resin foamed particles. Due to these features, the polypropylene resin in-mold foam molded articles produced by using polypropylene resin foamed particles are used for cushioning materials, returnable boxes, heat insulating materials, automobile members, and various purposes.

The polypropylene resin in-mold foam molded articles are also used as cushioning materials for electronic devices and precision apparatuses, a parts tray of a robotized line, and radio wave absorbers used for suppressing radiation noises or radio reflection of anechoic chambers and electronic devices, for example. The electroconductive polypropylene resin in-mold foam molded articles used in such a case contain 10% by weight or more of electroconductive carbon black (for example, Patent Documents 1 to 6).

When containing 10% by weight or more of electroconductive carbon black, the polypropylene resin in-mold foam molded article unfortunately has lower flame retardancy. When applied to members requiring flame retardancy, such an in-mold foam molded article needs to contain a large amount of a flame retardant.

The reduction in flame retardancy of electroconductive polypropylene resin in-mold foam molded articles is not marked when electroconductive polypropylene resin foamed particles are produced with an organic foaming agent such as butane as the foaming agent, but the reduction is marked when an inorganic foaming agent such as carbon dioxide is used.

Patent Documents 1 to 6 do not clearly indicate such a disadvantage of the reduction in flame retardancy of electroconductive polypropylene resin in-mold foam molded articles, particularly the disadvantage of a marked reduction in flame retardancy when an inorganic foaming agent is used.

Carbon black includes carbon black for coloring in addition to the electroconductive carbon black, and the carbon black is typically used for coloring polypropylene resin in-mold foam molded articles. It is generally known that the flame retardancy of polypropylene resin in-mold foam molded articles is deteriorated when carbon black for coloring is used (for example, Patent Documents 7 to 9).

The flame retardancy of black-colored, polypropylene resin in-mold foam molded articles with carbon black is improved as follows: in Patent Document 7, a nitrogen-containing flame retardant (hindered amine flame retardant) is added to improve the flame retardancy; in Patent Document 8, an aggregate of carbon black agglomerate having a particular average area is used to improve the flame retardancy; and in Patent Document 9, a particular polyhydric alcohol is added to improve the flame retardancy.

The carbon black for coloring is added in a sufficient amount of 10% by weight or less in practice to color an in-mold foam molded article black although some of Patent Documents above describe an amount of 10% by weight or more. In examples in Patent Document 7, carbon black for coloring is added in a small amount of less than 5% by weight, and the improvement of flame retardancy is not shown when the amount is 10% by weight or more, which is the amount of electroconductive carbon black typically added.

Patent Document 8 describes that hydrophilic polymers and polyhydric alcohols such as polyethylene glycol and glycerin can be used in order to improve the expansion ratio, but does not suggest that such a compound affects the flame retardancy. Patent Document 8 does not describe that the disadvantage of the reduction in flame retardancy is marked when 10% by weight or more of carbon black is added or an inorganic foaming agent is used.

Patent Document 9 describes that the flame retardancy can be improved by the addition of a particular polyhydric alcohol when 10% by weight or less of carbon black for coloring is added, but indicates that the flame retardancy cannot be improved only by the addition of a particular polyhydric alcohol when carbon black for coloring is added in an amount of more than 10% by weight, for example, 15% by weight, as described in Comparative Examples.

The electroconductive carbon black and the carbon black for coloring, which are added to resins, are typically different in dibutyl phthalate (DBP) absorption amount. Carbon blacks having a DBP absorption amount of about 100

cm$^3$/100 g or more have excellent electric conductivity and thus are used as the electroconductive carbon black, whereas carbon blacks having a DBP absorption amount of less than 100 cm$^3$/100 g have excellent black coloring properties and thus are used as the carbon black for coloring.

It is not impossible that the carbon black for coloring is used to impart electric conductivity. However, in order to give excellent electric conductivity (for example, a volume resistivity value of 5,000Ω • cm or less), the carbon black for coloring needs to be added in a larger amount than that of the electroconductive carbon black. This makes foam molding difficult, for example, and thus is impractical.

In order to provide a molded article of inorganic substance-containing polypropylene resin foamed particles that has added values such as high electric conductivity due to a large amount of an inorganic substance and also has good punching processability, Patent Document 10 describes a molded article of inorganic substance-containing polypropylene resin foamed particles. The molded article includes a polypropylene resin composition, as a base material, containing 57 to 92% by weight of a polypropylene resin, 3 to 30% by weight of an ethylene-α-olefin copolymer rubber, and 5 to 40% by weight of an inorganic substance. Patent Document 10 describes that when electric conductivity is imparted, 10% by weight or more of electroconductive carbon can be added to foamed particles, thereby expressing excellent electric conductivity. Comparative Example 2 describes foamed particles and a foam molded article containing 14% by weight of ketjen black (manufactured by Ketjen Black International Co.; Ketjen Black EC, a BET specific surface area of 800 m$^2$/g) as the electric conductive carbon.

However, when a flame retardant is added to a polypropylene resin containing a large amount of electroconductive carbon black, the resulting foamed particles are likely to have a higher open-cell ratio, and the resulting molded article has poor surface nature, unfortunately. In the present invention, the "open-cell ratio" is the ratio of open cells relative to the whole cells in foamed particles.

As described above, conventional techniques are insufficient to further impart excellent flame retardancy to electroconductive polypropylene resin in-mold foam molded articles that contain a large amount of electroconductive carbon black in order to achieve excellent electric conductivity, and there is a demand for improvement.

Citation List

Patent Literatures

Patent Document 1: JP-ANo. H07-300536
Patent Document 2: JP-A No. H09-202837
Patent Document 3: JP-ANo. 2000-169619
Patent Document 4: JP-ANo. 2004-175819
Patent Document 5: JP-ANo. 2003-229691
Patent Document 6: JP-ANo. 2004-319603
Patent Document 7: JP-A No. 2004-263033
Patent Document 8: JP-ANo. 2010-209145
Patent Document 9: JP-ANo. 2010-270243
Patent Document 10: JP-A No. H10-251436 other relevant documents are JP-A-2005/256007, JP-A-2013/117037, JP-A-2013/035949 and WO-A-2013/022049.

Summary of Invention

Technical Problem

An object of the present invention is to provide an electroconductive polypropylene resin in-mold foam molded article having excellent electric conductivity and also having excellent flame retardancy and surface nature without increasing the open-cell ratio. Another object of the present invention is to provide electroconductive polypropylene resin foamed particles constituting the electroconductive polypropylene resin in-mold foam molded article. In particular, the present invention aims to enable the achievement of excellent flame retardancy in an electroconductive polypropylene resin in-mold foam molded article produced from electroconductive polypropylene resin foamed particles containing an inorganic foaming agent and conventionally having low flame retardancy.

Solution to Problem

As a result of intensive studies to solve the problem, the inventors of the present invention have found that in an electroconductive polypropylene resin in-mold foam molded article containing an electroconductive carbon black having a particular dibutyl phthalate absorption amount (hereinafter also called "DBP absorption amount") and exhibiting excellent electric conductivity, the flame retardancy is improved while the increase in open-cell ratio is suppressed, by selecting an electroconductive polypropylene resin composition having a particular melt index as the substrate resin of electroconductive polypropylene resin foamed particles, and have completed the present invention.

In other words, the present invention includes the following aspects.

[1] Electroconductive polypropylene resin foamed particles as disclosed in claim 1 produced by foaming electroconductive polypropylene resin particles including an electroconductive polypropylene resin composition containing 11 parts by weight or more and 25 parts by weight or less of an electroconductive carbon black relative to 100 parts by weight of a polypropylene resin, and 0.01-10 parts bubble size increasing agent, in which the electroconductive polypropylene resin composition has a melt index of 1.0 g/10 min or more and 4.0 g/10 min or less where the melt index is determined at a load of 5,000 g and a temperature of 230 $\pm$ 0.2°C.

[2] The electroconductive polypropylene resin foamed particles according to the aspect [1], in which the foamed particles are foamed with an inorganic physical foaming agent including carbon dioxide.

[3] The electroconductive polypropylene resin foamed particles according to the aspect [1] or [2], in which the foamed particles have a bulk density of 30 g/L or more and 45 g/L or less.

[4] The electroconductive polypropylene resin foamed particles according to any one of the aspects [1] to [3], in which the foamed particles have two melting peaks in measurement by differential scanning calorimetry, and a ratio of the melting peak at a high temperature side, $\{Qh/(Q1 + Qh)\} \times 100$, calculated from a heat quantity Q1 of the melting peak at a low temperature side and a heat quantity Qh of the melting peak at the high temperature side is 8% or more and less than 25%.

[5] An electroconductive polypropylene resin in-mold foam molded article produced from the electroconductive polypropylene resin foamed particles according to any one of the aspects [1] to [4], the electroconductive polypropylene resin in-mold foam molded article having a volume resistivity value of 10Ω・cm or more and 5.000Ω・cm or less.

[6] The electroconductive polypropylene resin in-mold foam molded article according to the aspect [5], in which the molded article passes UL94 HBF flammability test.

[7] The electroconductive polypropylene resin in-mold foam molded article according to the aspect [5] or [6], in which the molded article has a molded article density of 30 g/L or more and 45 g/L or less.

[8] The electroconductive polypropylene resin in-mold foam molded article according to any one of the aspects [5] to [7], in which the molded article has two melting peaks in measurement by differential scanning calorimetry, and a ratio of the melting peak at a high temperature side, $\{qh/(ql + qh)\} \times 100$, calculated from a heat quantity ql of the melting peak at a low temperature side and a heat quantity qh of the melting peak at the high temperature side is 8% or more and less than 25%.

[9] A method for producing electroconductive polypropylene resin foamed particles, the method including a one-step foaming process, the one-step foaming process including placing electroconductive polypropylene resin particles, water, and a foaming agent in a pressure-resistant container, dispersing the contents in the pressure-resistant container under stirring and increasing a temperature of the contents to a temperature equal to or higher than a softening point of the electroconductive polypropylene resin particles, and then discharging the dispersion liquid in the pressure-resistant container into an area having a pressure lower than an internal pressure of the pressure-resistant container to foam the electroconductive polypropylene resin particles, in which the electroconductive polypropylene resin particles includes an electroconductive polypropylene resin composition that contains 11 parts by weight or more and 25 parts by weight or less of an electroconductive carbon black relative to 100 parts by weight of a polypropylene resin and has a melt index of 0.5 g/10 min or more and 4.0 g/10 min or less where the melt index is determined at a load of 5,000 g at 230 $\pm$ 0.2°C.

[10] The method for producing electroconductive polypropylene resin foamed particles according to the aspect [9], in which the foaming agent includes an inorganic physical foaming agent including carbon dioxide.

Advantageous Effects of Invention

An electroconductive polypropylene resin in-mold foam molded article produced by in-mold foam molding of electroconductive polypropylene resin foamed particles pertaining to the present invention has excellent electric conductivity and also has higher flame retardancy without any flame retardant. In other words, the present invention can advantageously provide electroconductive polypropylene resin foamed particles and an electroconductive polypropylene resin in-mold foam molded article having both excellent electric conductivity and flame retardancy.

In particular, an electroconductive polypropylene resin in-mold foam molded article obtained even by using electroconductive polypropylene resin foamed particles that are prepared by foaming with an inorganic foaming agent, which has markedly reduced the flame retardancy, has excellent flame retardancy and surface nature.

Brief Description of the Drawings

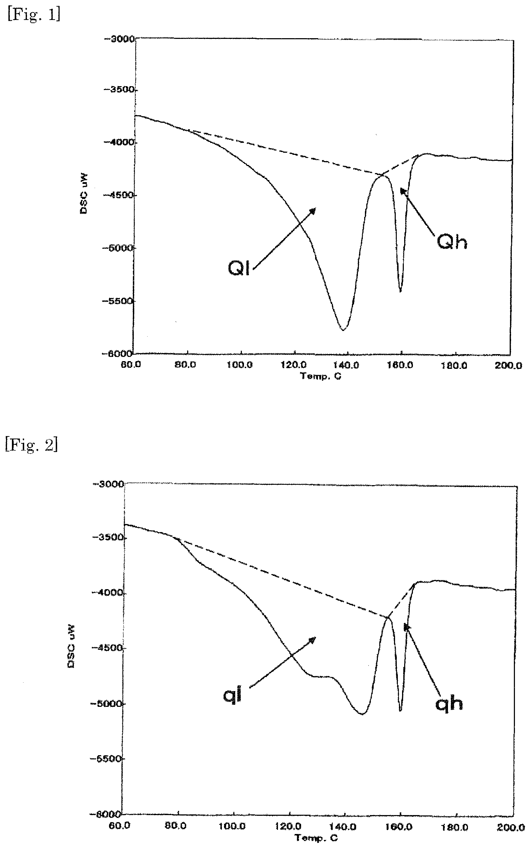

Fig. 1 is an example of a DSC curve obtained when polypropylene resin one-step foamed particles of the present invention are measured with a differential scanning calorimeter. The horizontal axis indicates temperature, and the vertical axis indicates endothermic quantity. The area surrounded by the low temperature peak and the broken line is Q1 (heat quantity of the melting peak at the low temperature side), and the area surrounded by the high temperature peak and the broken line is Qh (heat quantity of the melting peak at the high temperature side).

Fig. 2 is an example of a DSC curve obtained when a polypropylene resin in-mold foam molded article of the present invention is measured with a differential scanning calorimeter. The horizontal axis indicates temperature, and the vertical axis indicates endothermic quantity. The area surrounded by the low temperature peak and the broken line is ql (heat quantity of the melting peak at the low temperature side), and the area surrounded by the high temperature peak and the broken line is qh (heat quantity of the melting peak at the high temperature side).

Description of Embodiments

Electroconductive polypropylene resin foamed particles according to the present invention are produced by foaming electroconductive polypropylene resin particles including an electroconductive polypropylene resin composition containing 11 parts by weight or more and 25 parts by weight or less of an electroconductive carbon black relative to 100 parts by weight of a polypropylene resin, and the electroconductive polypropylene resin composition has a melt index of 1.0 g/10 min or more and 4.0 g/10 min or less where the melt index is determined at a load of 5,000 g at 230 ± 0.2°C.

The electroconductive polypropylene resin composition containing an electroconductive carbon black and used in the present invention has a melt index (hereinafter also called "MI") of 1.0 g/10 min or more and 4.0 g/10 min or less, and preferably, 1.5 g/10 min or more and 3.9 g/10 min or less, where the melt index is determined with an MI measurement apparatus described in JIS K7210: 1999 in conditions of an orifice size of 2.0959 ± 0.005 mmφ an orifice length of 8.000 ± 0.025 mm, a load of 5,000 g, and a temperature of 230 ± 0.2°C.

If having an MI of less than 1.0 g/10 min determined at a load of 5,000 g and a temperature of 230 ± 0.2°C, the electroconductive polypropylene resin composition is likely to become difficult to increase the expansion ratio. If having an MI of more than 4.0 g/10 min determined at a load of 5,000 g and a temperature of 230 ± 0.2°C, the electroconductive polypropylene resin composition is likely to reduce the flame retardancy of a resulting electroconductive polypropylene resin in-mold foam molded article, which becomes difficult to meet the requirement of UL94 HBF.

If the electroconductive polypropylene resin composition in the present invention is measured at a load of 2,160 g and a temperature of 230 ± 0.2°C, it is difficult to determine the MI value because the resin composition hardly flows due to high viscosity.

The MI of an electroconductive polypropylene resin composition determined at a load of 5,000 g and a temperature of 230 ± 0.2°C can be controlled by selecting the type or amount of an electroconductive carbon black having a particular dibutyl phthalate absorption amount (DBP absorption amount) or by selecting the MI of a polypropylene resin.

For example, if containing an electroconductive carbon black having a higher DBP absorption amount, the resin composition is likely to have a lower MI, whereas if containing an electroconductive carbon black having a lower DBP absorption amount, the resin composition is likely to have a higher MI. If containing an electroconductive carbon black in a smaller amount, the resin composition has a higher MI, whereas if containing an electroconductive carbon black in a larger amount, the resin composition has a lower MI. If containing a polypropylene resin having a lower MI, the resin composition has a lower MI.

The electroconductive polypropylene resin foamed particles pertaining to the present invention preferably has a comparatively low bulk density of 30 g/L or more and 45 g/L or less. If having a bulk density of less than 30 g/L, the electroconductive polypropylene resin foamed particles cannot pass the standard for flame retardancy, UL94 HBF test, which is an advanced standard for flame retardancy, in some cases, whereas if having a bulk density of more than 45 g/L, the electroconductive polypropylene resin foamed particles are likely to naturally express flame retardancy, and thus the advantageous effect by the present invention is likely to be reduced.

Generally, the electric conductivity of an in-mold foam molded article depends on the type of electroconductive carbon black used and the molded article density of the in-mold foam molded article. The molded article density affects the electric conductivity because the amount of carbon black in an in-mold foam molded article is limited by the molded article density. In other words, if having a smaller molded article density, the in-mold foam molded article contains carbon black in a smaller amount, and thus the electric conductivity is likely to be deteriorated. If having a larger molded article density, the in-mold foam molded article contains carbon black in a larger amount, and thus the electric conductivity is likely to be improved.

In the present invention, as long as the polypropylene resin foamed particles can have a bulk density in a preferred range, the electroconductive carbon black used in the present invention has a dibutyl phthalate absorption amount (DBP absorption amount) of 150 $cm^3$/100 g or more and 600 $cm^3$/100 g or less, and more preferably, 300 $cm^3$/100 g or more and 600 $cm^3$/100 g or less. If having a DBP absorption amount of less than 150 $cm^3$/100 g, the electroconductive carbon black needs to be added in a large amount in order to impart excellent electric conductivity, and this may make it difficult to produce foamed particles. Even when foamed particles are produced, the electroconductive polypropylene resin foamed particles are likely to have a smaller average bubble size, and the flame retardancy is likely to be markedly deteriorated. If the DBP absorption amount exceeds 600 $cm^3$/100 g, the electric conductivity or the flame retardancy is not improved, and much higher performances are not achieved.

Here, the DBP absorption amount is a value determined in accordance with JIS K6217-4: 2008.

Typical carbon blacks for coloring have a DBP absorption amount of less than 100 $cm^3$/100 g, and good electric conductivity and flame retardancy cannot be simultaneously satisfied.

In the present invention, any electroconductive carbon blacks having a DBP absorption amount of 150 $cm^3$/100 g or more and 600 $cm^3$/100 g or less can be used, and furnace black, channel black, acetylene black, and thermal black can be used, for example.

The electroconductive carbon black used in the present invention can have any BET specific surface area, but the BET specific surface area is preferably 200 $m^2$/g or more, and more preferably, 300 $m^2$/g or more from the viewpoint of achieving good electric conductivity. If the BET specific surface area is 200 $m^2$/g or more, the amount of the electroconductive carbon black for imparting excellent electric conductivity can be reduced.

Here, the BET specific surface area is a value determined by the nitrogen adsorption method in accordance with JIS K6217-2: 2001.

Specific examples of the electroconductive carbon black used in the present invention include Ketjen Black EC300J (manufactured by Lion Corporation, a DBP absorption amount of 365 $cm^3$/100 g, a BET specific surface area of 800 $m^2$/g), Ketjen Black EC600JD (manufactured by Lion Corporation, a DBP absorption amount of 495 $cm^3$/100 g, a BET specific surface area of 1,270 $m^2$/g), ENSACO 350G (manufactured by Timcal, a DBP absorption amount of 320 $cm^3$/100 g, a BET specific surface area of 770 $m^2$/g), ENSACO 260G (manufactured by Timcal, a DBP absorption amount of 190 $cm^3$/100 g, a BET specific surface area of 70 $m^2$/g), BlackPearls 2000 (manufactured by Cabot, a DBP absorption amount of 330 $cm^3$/100 g, a BET specific surface area of 1,475 $m^2$/g), Denka Black FX-35 (manufactured by Denki Kagaku Kogyo Kabushiki Kaisha, a DBP absorption amount of 220 $cm^3$/100 g, a BET specific surface area of 133 $m^2$/g), Printex XE2 (manufactured by Degussa, a DBP absorption amount of 380 $cm^3$/100 g, a BET specific surface area of 950 $m^2$/g), and Vulcan XC72 (manufactured by Cabot, a DBP absorption amount of 174 $cm^3$/100 g, a BET specific surface area of 254 $m^2$/g), in terms of trade name.

In the present invention, the amount of the electroconductive carbon black is 11 parts by weight or more and 25 parts by weight or less, preferably, 13 parts by weight or more and 23 parts by weight or less, and more preferably, 17 parts by weight or more and 22 parts by weight or less relative to 100 parts by weight of the polypropylene resin. If added in an amount of less than 11 parts by weight, the electroconductive carbon black can be unlikely to express good electric conductivity. If the amount is more than 25 parts by weight, the average bubble size becomes small, and good flame retardancy is unlikely to be achieved.

The polypropylene resin used in the present invention is not limited to particular resins and is exemplified by polypropylene homopolymers, ethylene/propylene random copolymers, butene-1/propylene random copolymers, ethylene/butene-1/propylene random copolymers, ethylene/propylene block copolymers, butene-1/propylene block copolymers, propylene-chlorinated vinyl copolymers, and propylene/maleic anhydride copolymers. Among them, ethylene/propylene random copolymers and ethylene/butene-1/propylene random copolymers are preferred due to good foamability and good moldability.

The ethylene content in the ethylene/propylene random copolymer or the ethylene/butene-1/propylene random copolymer is preferably 0.2% by weight or more and 10% by weight or less relative to 100% by weight of the corresponding copolymer.

The butene-1 content in the ethylene/butene-1/propylene random copolymer is preferably 0.2% by weight or more and 10% by weight or less relative to 100% by weight of the copolymer. The total content of ethylene and butene-1 is preferably 0.5% by weight or more and 10% by weight or less.

If the contents of ethylene and butene-1 in the respective copolymers are within the range, the foamability and the moldability can be improved while the reduction in mechanical properties is suppressed.

The melting point of the polypropylene resin used in the present invention is not limited to particular values but is preferably 125°C or more and 150°C or less, and more preferably, 130°C or more and 145°C or less. If the polypropylene resin has a melting point of less than 125°C, the heat resistance is likely to be deteriorated, whereas if the polypropylene resin has a melting point of more than 150°C, it is likely to become difficult to improve the expansion ratio.

Here, the melting point of the polypropylene resin is a value determined through calorimetric measurement by differential scanning calorimetry (hereinafter also called "DSC method"). Specifically, 5 to 6 mg of the resin is melted by increasing the temperature at a temperature increase rate of 10°C/min from 40°C to 220°C, then the melted resin is crystallized by decreasing the temperature at a temperature decrease rate of 10°C/min from 220°C to 40°C, and the temperature is increased at a temperature increase rate of 10°C/min from 40°C to 220°C. On the DSC curve obtained, the melting peak temperature in the second temperature increase is regarded as the melting point.

The melt index of the polypropylene resin used in the present invention is not limited to particular values. The MI value determined with an MI measurement apparatus described in JIS K7210: 1999 in conditions of an orifice size of 2.0959 ± 0.005 mmφ, an orifice length of 8.000 ± 0.025 mm, a load of 2,160 g, and a temperature of 230 ± 0.2°C is preferably 1 g/10 min or more and 30 g/10 min or less, more preferably, 3 g/10 min or more and 20 g/10 min or less, and even more preferably, 5 g/10 min or more and 18 g/10 min or less.

If the polypropylene resin has an MI of less than 1 g/10 min determined at a load of 2,160 g and a temperature of 230 ± 0.2°C, the electroconductive polypropylene resin composition after the addition of electroconductive carbon black has an excessively low MI, and thus it is likely to become difficult to improve the expansion ratio. If the polypropylene resin has an MI of more than 30 g/10 min, bubbles communicate in the resulting electroconductive polypropylene resin foamed particles, and thus the electroconductive polypropylene resin in-mold foam molded article is likely to have lower compressive strength or to have poor surface nature.

If the polypropylene resin has an MI of 1 g/10 min or more and 30 g/10 min or less determined at a load of 2,160 g and a temperature of 230 ± 0.2°C, electroconductive polypropylene resin foamed particles having a comparatively large expansion ratio is likely to be obtained. In addition, the electroconductive polypropylene resin in-mold foam molded article obtained by in-mold foam molding of the electroconductive polypropylene resin foamed particles has excellent surface appearance and a small dimensional shrinkage ratio.

The polymerization catalyst for monomers to synthesize the polypropylene resin used in the present invention can be a Ziegler catalyst or a metallocene catalyst, for example, but is not limited to them.

The electroconductive polypropylene resin foamed particles of the present invention have an average bubble size of more than 0.08 mm and not more than 0.20 mm, and preferably, 0.10 mm or more and 0.20 mm or less. If the electroconductive polypropylene resin foamed particles have an average bubble size of 0.08 mm or less, the surface extension of the electroconductive polypropylene resin in-mold foam molded article is reduced, and the molded article is likely to have a poor appearance. In the present invention, it is difficult to obtain electroconductive polypropylene resin foamed particles having an average bubble size of more than 0.20 mm.

Here, the average bubble size of polypropylene resin foamed particles is a value determined by the following process.

First, substantially the center of a polypropylene resin foamed particle is cut with careful attention not to break bubble films (cell films) of the foamed particle, and the cut section is observed under a microscope [manufactured by Keyence Corporation: VHX digital microscope] (an observation photograph is taken). On the observation display or the observation photograph with the microscope, a line segment corresponding to a length of 1,000 μm is drawn except the surface layer part of the foamed particle. The number n of bubbles through which the line segment passes is counted, and then the bubble size (= 1,000/n (μm)) is calculated. The same operation is carried out with respect to ten foamed particles, and the average of the respective bubble sizes calculated is regarded as the average bubble size of the polypropylene resin foamed particles.

In the present invention, a bubble size enlarging agent is added in order to enlarge the cell size.

Specific examples of the bubble size enlarging agent include polyethylene glycol and glycerin. In addition, of glycerin fatty acid monoesters, glycerin fatty acid diesters, polyoxyethylene alkyl ethers, sorbitan fatty acid esters, polyoxyethylene monoesters, alkylalkanolamides, polyoxyethylene alkylamines, and polyolefin-polyether block copolymers, compounds having a melting point of 150°C or less and having a boiling point of 150°C or more are exemplified. Specifically, glycerol monostearate and glycerol distearate are exemplified. Among them, polyethylene glycols are more preferred, and polyethylene glycols having an average molecular weight of 200 or more and 6,000 or less are even more preferred.

Relative to 100 parts by weight of the polypropylene resin, the bubble size enlarging agent is added in an amount of 0.01 parts by weight or more and 10 parts by weight or less, preferably, 0.2 parts by weight or more and 5 parts by weight or less, and more preferably, 0.3 parts by weight or more and 2 parts by weight or less. If added in an amount of less than 0.01 parts by weight, the bubble size enlarging agent is likely to give a small effect on the enlargement of the average bubble size. If the bubble size enlarging agent is added in an amount of more than 10 parts by weight, the enlargement effect is not increased and much higher effect is unlikely to be achieved. The effective amount varies with the type of the bubble size enlarging agent.

In the present invention, the electroconductive polypropylene resin composition containing 11 parts by weight or more and 25 parts by weight or less of an electroconductive carbon black and 0.01 parts by weight or more and 10 parts by weight or less of a bubble size enlarging agent relative to 100 parts by weight of the polypropylene resin is typically melted and kneaded previously with an extruder, a kneader, a Banbury mixer, rolls, or other apparatuses and processed into a desired particle shape such as a column shape, an oval shape, a spherical shape, a cubic shape, and a rectangular parallelepiped shape, giving electroconductive polypropylene resin particles so as to be easily used for foaming.

As for the size of the polypropylene resin particles used in the present invention, a single particle preferably has a weight of 0.1 mg to 30 mg, and more preferably, 0.3 mg to 10 mg. The weight of a single resin particle is an average resin particle weight calculated from 100 resin particles randomly selected and is indicated in terms of mg/particle.

At this time, materials are melted and kneaded, and thus the electroconductive carbon black and the bubble size enlarging agent are substantially uniformly dispersed in resin particles. As a result, the outer layer and the core layer are not clearly separated in the resulting electroconductive polypropylene resin foamed particles, and the electroconductive carbon black and the bubble size enlarging agent are substantially uniformly dispersed in the entire foamed particles.

In the present invention, the electroconductive polypropylene resin composition may further contain various additives such as antioxidants, light resistance improvers, antistatic agents, pigments, flame retardants, and bubble nucleating agents, as necessary, giving electroconductive polypropylene resin particles. Such an additive is preferably added to a resin in a production process of the electroconductive polypropylene resin particles as with the bubble size enlarging agent.

The electroconductive polypropylene resin foamed particles pertaining to the present invention can be produced by the production method shown below.

For example, the electroconductive polypropylene resin particles, water, and a foaming agent are placed in a pressure-resistant container. The contents in the container are dispersed under stirring, and the temperature of the contents in the pressure-resistant container is increased to a temperature equal to or higher than a softening point of the electroconductive polypropylene resin particles. Next, the dispersion liquid in the pressure-resistant container is discharged into an area having a pressure lower than an internal pressure of the pressure-resistant container to foam the electroconductive polypropylene resin particles (subjected to a foaming process), thereby producing the electroconductive polypropylene resin foamed particles. The area having a pressure lower than an internal pressure of the pressure-resistant container preferably has atmospheric pressure (1 atm). Hereinafter, the above foaming process in which electroconductive polypropylene resin particles are foamed is called "one-step foaming process".

Here, when the temperature of contents in the pressure-resistant container is increased to a temperature equal to or higher than a softening point of the electroconductive polypropylene resin particles, the temperature is preferably equal to or higher than the "temperature 20°C lower than a melting point" of the electroconductive polypropylene resin particles and equal to or lower than the "temperature 10°C higher than a melting point" of the electroconductive polypropylene resin particles in order to achieve the foamability of the electroconductive polypropylene resin particles.

The foaming agent used in the present invention is preferably an inorganic foaming agent such as carbon dioxide, water, air, and nitrogen from the viewpoint of environmental load and the safety of apparatuses. These foaming agents can be used singly or in combination of two or more of them. A foaming agent containing carbon dioxide is most preferably used.

In the present invention, the amount of the foaming agent is not limited to particular values, and an appropriate amount can be used depending on a desired expansion ratio of the electroconductive polypropylene resin foamed particles. Specifically, the amount of the foaming agent used is preferably 2 parts by weight or more and 60 parts by weight or less relative to 100 parts by weight of the electroconductive polypropylene resin particles, for example.

When water is used as the foaming agent, the water used for dispersing the electroconductive polypropylene resin particles in the pressure-resistant container can also be used as the foaming agent. In this case, by previously adding a hydrophilic compound or a water-absorbing compound to the electroconductive polypropylene resin particles, the electroconductive polypropylene resin particles easily absorb water in the pressure-resistant container. This facilitates the use of water as the foaming agent.

The hydrophilic compound and the water-absorbing compound can be any types and can be used in any amounts. In the present invention, the above-mentioned bubble size enlarging agent has hydrophilic properties or water absorbability and can enlarge bubble sizes, and thus the bubble size enlarging agent is preferably also used as the hydrophilic compound or the water-absorbing compound.

When water is used as the foaming agent, the amount of water used is preferably 50 parts by weight or more and 500 parts by weight or less, and more preferably, 100 parts by weight or more and 350 parts by weight or less relative to 100 parts by weight of the electroconductive polypropylene resin particles. This enables the electroconductive polypropylene resin particles and other materials to be dispersed in the pressure-resistant container and also enables water to be used as the foaming agent.

When a foaming agent containing carbon dioxide is used, the bubble size enlarging agent used is more preferably polyethylene glycol, glycerin, or a similar compound.

The pressure-resistant container used for producing the electroconductive polypropylene resin foamed particles can be any containers that can withstand an internal pressure and an inner temperature of the container in the production method pertaining to the present invention. Specifically exemplified is an autoclave pressure-resistant container.

To produce the electroconductive polypropylene resin foamed particles, an inorganic dispersant is more preferably used together with the electroconductive polypropylene resin particles, water, and the foaming agent. Examples of the inorganic dispersant include tribasic calcium phosphate, tribasic magnesium phosphate, basic magnesium carbonate, calcium carbonate, basic zinc carbonate, aluminum oxide, iron oxide, titanium oxide, aluminosilicate, kaolin, and barium sulfate.

In the present invention, a dispersion assistant is preferably also used in combination in order to increase the dispersibility of the electroconductive polypropylene resin particles in the pressure-resistant container. Examples of the dispersion assistant include sodium dodecylbenzenesulfonate, sodium alkanesulfonate, sodium alkylsulfonate, sodium alkyl diphenyl ether disulfonate, and sodium $\alpha$-olefin sulfonate.

In the present invention, the amounts of the inorganic dispersant and the dispersion assistant can be set depending on the type thereof and the type and the amount of electroconductive polypropylene resin particles used, and are not limited to particular values. Typically, the inorganic dispersant is preferably used in an amount of 0.2 parts by weight or more and 3 parts by weight or less and the dispersion assistant is preferably used in an amount of 0.001 parts by weight or more and 0.1 parts by weight or less relative to 100 parts by weight of water.

Electroconductive polypropylene resin foamed particles having a comparatively high bulk density can be produced only through the one-step foaming process. In some cases, polypropylene resin foamed particles having a comparatively low bulk density cannot be produced only through the one-step foaming process. In such a case, by carrying out a two-step foaming process of further foaming the electroconductive polypropylene resin foamed particles obtained through the one-step foaming process, or by carrying out a three-step foaming process of further foaming foamed particles after the two-step foaming process, electroconductive polypropylene resin foamed particles having a comparatively low bulk density can be obtained.

The two-step foaming process (also the three-step foaming process) can be exemplified by the methods shown below.

For example, the electroconductive polypropylene resin foamed particles obtained through the one-step foaming process are placed in a pressure-resistant closed container, and then an inorganic gas such as nitrogen, air, and carbon dioxide is injected under pressure into the container at 0.1 MPa or more and 0.6 MPa or less (gauge pressure). Next, the electroconductive polypropylene resin foamed particles are pressurized and impregnated with the inorganic gas for 1 hour or more and 48 hours or less (pressurization treatment) to increase the pressure in the electroconductive polypropylene resin foamed particles higher than normal pressure (1 atm), and then the electroconductive polypropylene resin foamed particles are heated with water vapor at a pressure of 0.01 MPa or more and 0.4 MPa or less (gauge pressure) to be further foamed. This process can give electroconductive polypropylene resin foamed particles having a lower bulk density (larger expansion ratio). By further foaming the electroconductive polypropylene resin foamed particles obtained through the two-step foaming process in the same manner as in the two-step foaming process, electroconductive polypropylene resin foamed particles having a much lower bulk density (much higher expansion ratio) can be obtained.

The electroconductive polypropylene resin foamed particles obtained through the one-step foaming process are called "one-step foamed particles", the electroconductive polypropylene resin foamed particles obtained through the two-step foaming process are called "two-step foamed particles", and the electroconductive polypropylene resin foamed particles obtained through the three-step foaming process are called "three-step foamed particles".

As described above, the electroconductive polypropylene resin foamed particles pertaining to the present invention preferably have an average bubble size of 0.08 mm or more and less than 0.20 mm. Even when one-step foamed particles have an average bubble size of less than 0.08 mm, the two-step foaming process (or three-step foaming process) allows foamed particles to have a larger average bubble size, and thus polypropylene resin foamed particles having an average bubble size of 0.08 mm or more and less than 0.20 mm can be produced.

The electroconductive polypropylene resin foamed particles pertaining to the present invention preferably have two melting peaks on the DSC curve obtained through calorimetric measurement by differential scanning calorimetry, and the ratio of the melting peak at the high temperature side "$\{Qh/(Q1 + Qh)\} \times 100$" (hereinafter also called "DSC ratio") calculated from a heat quantity $Q1$ of the melting peak at the low temperature side and a heat quantity $Qh$ of the melting peak at the high temperature side is preferably 8% or more and 25% or less, and more preferably, 8% or more and less than 20%. If the electroconductive polypropylene resin foamed particles have a DSC ratio within the range, the bulk density is easily reduced, and an electroconductive polypropylene resin in-mold foam molded article having excellent fusion properties and excellent surface appearance is readily obtained.

If electroconductive polypropylene resin foamed particles have a DSC ratio of less than 8%, bubbles in the electroconductive polypropylene resin foamed particles are likely to communicate, and a molded article after in-mold foam molding is likely to be shrunk or to have a surface with wrinkles. If the DSC ratio exceeds 25%, the bulk density is unlikely to be reduced.

Here, as shown in Fig. 1, on the DSC curve that has two melting peaks and is obtained when the temperature of electroconductive polypropylene resin foamed particles is increased from 40°C to 220°C at a rate of 10°C/min, $Q1$ shows the heat quantity of the melting peak at the low temperature side, that is, the heat quantity surrounded by the DSC curve of the low temperature peak and a tangent line drawn from a maximum point between the low temperature peak and the high temperature peak to a melting start base line. Qh shows the heat quantity of the melting peak at the high temperature side, that is, the heat quantity surrounded by the DSC curve of the high temperature peak and a tangent line drawn from a maximum point between the low temperature peak and the high temperature peak to a melting end base line.

The heat quantity Qh of the melting peak at the high temperature side of the electroconductive polypropylene resin foamed particles is not limited to particular values, but is preferably 2 J/g or more and 20 J/g or less, more preferably, 3 J/g or more and 15 J/g or less, and even more preferably, 4 J/g or more and 10 J/g or less. If the heat quantity Qh of the melting peak at the high temperature side of the electroconductive polypropylene resin foamed particles is less than 2 J/g, bubbles in the electroconductive polypropylene resin foamed particles are likely to communicate, and a molded article after in-mold foam molding is likely to be shrunk or to have a surface with wrinkles. If the heat quantity Qh of the melting peak at the high temperature side exceeds 20 J/g, the expansion ratio is unlikely to be increased.

The DSC ratio and the heat quantity of the melting peak at the high temperature side can be appropriately controlled, for example, by the holding time from the completion of temperature increase to the foaming in the one-step foaming process (holding time after the temperature substantially reaches a foaming temperature until foaming), the foaming temperature (temperature during foaming), and the foaming pressure (pressure during foaming). Generally, a longer holding time, a lower foaming temperature, or a lower foaming pressure is likely to lead to a larger DSC ratio or a larger heat quantity of the melting peak at the high temperature side.

From the above, a condition giving a desired DSC ratio and a desired heat quantity of the melting peak at the high temperature side can be easily found by repeating several experiments in which the holding time, the foaming temperature, and the foaming pressure are systematically, appropriately changed. The foaming pressure can be controlled by the amount of a foaming agent.

The amount of the inorganic dispersant adhering to the surfaces of the electroconductive polypropylene resin foamed particles pertaining to the present invention is preferably 2,000 ppm or less, more preferably, 1,300 ppm or less, and even more preferably, 800 ppm or less. If the amount of the inorganic dispersant adhering to the surface exceeds 2,000 ppm, the fusion properties during in-mold foam molding are likely to be reduced.

In the present invention, to make electroconductive polypropylene resin foamed particles into an electroconductive polypropylene resin in-mold foam molded article, conventionally known methods can be used. The method is exemplified by

A) a method of filling electroconductive polypropylene resin foamed particles directly in a mold and carrying out in-mold foam molding,
B) a method of previously injecting an inorganic gas such as air into electroconductive polypropylene resin foamed particles under pressure to impart an internal pressure (foamability), then filling the particles in a mold, and carrying out in-mold foam molding, and
C) a method of filling compressed electroconductive polypropylene resin foamed particles in a mold and carrying out in-mold foam molding.

The method of producing an electroconductive polypropylene resin in-mold foam molded article by using the electroconductive polypropylene resin foamed particles pertaining to the present invention is specifically exemplified as follows: Electroconductive polypropylene resin foamed particles are placed in a pressure-resistant container and then are previously pressurized by using an inorganic gas, thereby injecting the inorganic gas into the electroconductive polypropylene resin foamed particles under pressure to impart an internal pressure (foamability). Next, the electroconductive polypropylene resin foamed particles are filled in a molding space that is composed of two molds (a male die and a female die) and can be closed but cannot be tightly sealed, and are molded, for example, by using water vapor (heated water vapor) as the heating medium at a pressure of about 0.1 MPa or more and 0.4 MPa or less (gauge pressure) for a heating time of about 3 seconds or more and 30 seconds or less, and consequently the electroconductive polypropylene resin foamed particles are foamed and fused with each other. The mold is then cooled, for example, with water to such a degree that deformation of the electroconductive polypropylene resin in-mold foam molded article after release can be suppressed, and the molds are unclosed, giving the electroconductive polypropylene resin in-mold foam molded article.

The internal pressure of the electroconductive polypropylene resin foamed particles can be adjusted, for example, by applying a pressure of 0.1 MPa (gauge pressure) or more and 2.0 MPa (gauge pressure) or less with an inorganic gas such as air and nitrogen in a pressure-resistant container for a pressurizing time of 1 hour or more and 48 hours or less at a pressurizing temperature of room temperature (25°C) or more and 80°C or less.

The electroconductive polypropylene resin in-mold foam molded article pertaining to the present invention preferably has a volume resistivity value of 10Ω·cm or more and 5,000Ω·cm or less, more preferably, 10Ω·cm or more and 3.000Ω·cm or less, and even more preferably, 10Ω·cm or more and 2,000Ω·cm or less. If having a volume resistivity value of more than 5,000Ω·cm, the electroconductive polypropylene resin in-mold foam molded article is likely to have insufficient electric conductivity for applications as cushioning materials for electronic devices and precision apparatuses, a parts tray of a robotized line, and radio wave absorbers used for suppressing radiation noises or radio reflection of anechoic chambers and electronic devices. If having the molded article density specified by the present invention, the electroconductive polypropylene resin in-mold foam molded article is difficult to have a volume resistivity value of less than 10Ω • cm.

The electroconductive polypropylene resin in-mold foam molded article pertaining to the present invention preferably passes the standard for flame retardancy, UL94 HBF test.

The electroconductive polypropylene resin in-mold foam molded article pertaining to the present invention preferably has a comparatively low molded article density of 30 g/L or more and 45 g/L or less, and more preferably, 30 g/L or more and 40 g/L or less. If having a molded article density of less than 30 g/L, the electroconductive polypropylene resin in-mold foam molded article does not pass the standard for flame retardancy, UL94 HBF test, which is an advanced standard for flame retardancy, in some cases. If the molded article density exceeds 45 g/L, the flame retardancy is readily expressed, and thus the advantageous effect by the present invention is likely to be reduced.

On the DSC curve that has two melting peaks and is obtained through calorimetric measurement by differential scanning calorimetry of the electroconductive polypropylene resin in-mold foam molded article pertaining to the present invention, the ratio of the melting peak at the high temperature side "$\{qh/(ql + qh)\} \times 100$" (hereinafter also called "DSC ratio") calculated from a heat quantity ql of the melting peak at the low temperature side and a heat quantity qh of the melting peak at the high temperature side is preferably 8% or more and 25% or less, and more preferably, 8% or more and less than 20%. If the electroconductive polypropylene resin in-mold foam molded article has a DSC ratio within the range above, the electroconductive polypropylene resin in-mold foam molded article having excellent fusion properties and excellent surface appearance is readily obtained.

The electroconductive polypropylene resin in-mold foam molded article having a DSC ratio within the range can be obtained by in-mold foam molding of electroconductive polypropylene resin foamed particles having a DSC ratio of 8% or more and 25% or less. If the DSC ratio of a polypropylene resin in-mold foam molded article is less than 8%, bubbles in the electroconductive polypropylene resin in-mold foam molded article are likely to communicate, whereas if the DSC ratio exceeds 25%, the fusion properties are likely to be deteriorated.

Here, the DSC curve of an electroconductive polypropylene resin in-mold foam molded article is affected by heat history during in-mold foam molding, and thus is not completely the same as the DSC curve of the corresponding electroconductive polypropylene resin foamed particles. In particular, in the region of 100°C or more and 140°C or less of a low temperature peak (a melting peak at the low temperature side), shoulder peaks or small peaks can be observed in some cases. In the present invention, these shoulder peaks and small peaks are regarded as parts of the low temperature peak.

As shown in Fig. 2, the electroconductive polypropylene resin in-mold foam molded article has two melting peaks on the DSC curve obtained when the temperature of the molded article is increased from 40°C to 220°C at a rate of 10°C/min, and ql shows the heat quantity of the melting peak at the low temperature side, that is, the heat quantity surrounded by the DSC curve of the low temperature peak and a tangent line drawn from a maximum point between the low temperature peak and the high temperature peak to a melting start base line. qh shows the heat quantity of the melting peak at the high temperature side, that is, the heat quantity surrounded by the DSC curve of the high temperature peak and a tangent line drawn from a maximum point between the low temperature peak and the high temperature peak to a melting end base line.

The heat quantity qh of the melting peak at the high temperature side of the electroconductive polypropylene resin in-mold foam molded article is not limited to particular values, but is preferably 2 J/g or more and 20 J/g or less, more preferably, 3 J/g or more and 15 J/g or less, and even more preferably, 4 J/g or more and 10 J/g or less. If the heat quantity qh of the melting peak at the high temperature side of the electroconductive polypropylene resin in-mold foam molded article is less than 2 J/g, the mechanical strength is likely to be reduced, whereas if the heat quantity qh of the melting peak at the high temperature side exceeds 20 J/g, the fusion properties are likely to be reduced.

Examples

The present invention will next be described in detail with reference to examples, but the present invention is not limited to them.

The following compounds (substances) were used in examples and comparative examples.

• Polypropylene resin:

  • Ethylene-propylene random copolymer A (a melting point of 141°C, a melt index of 7 g/10 min at a load of 2,160 g, an ethylene content of 3% by weight)
  • Ethylene-propylene random copolymer B (a melting point of 143°C, a melt index of 0.5 g/10 min at a load of 2,160 g, an ethylene content of 3% by weight)

- Electroconductive carbon black:

  - ENSACO 350G [manufactured by Timcal, a DBP absorption amount of 320 cm$^3$/100 g, a BET specific surface area of 770 m$^2$/g]
  - BlackPearls 2000 [manufactured by Cabot, a DBP absorption amount of 330 cm$^3$/100 g, a BET specific surface area of 1,475 m$^2$/g]
  - Ketjen Black EC600JD [manufactured by Lion Corporation, a DBP absorption amount of 495 cm$^3$/100 g, a BET specific surface area of 1,270 m$^2$/g]
  - ENSACO 260G [manufactured by Timcal, a DBP absorption amount of 190 cm$^3$/100 g, a BET specific surface area of 70 m$^2$/g]
  - Denka Black FX-35 [manufactured by Denki Kagaku Kogyo Kabushiki Kaisha, a DBP absorption amount of 220 cm$^3$/100 g, a BET specific surface area of 133 m$^2$/g]
  - Vulcan XC72 [manufactured by Cabot, a DBP absorption amount of 174 cm$^3$/100 g, a BET specific surface area of 254 m$^2$/g]

- Bubble size enlarging agent:

  - Polyethylene glycol [manufactured by Lion Corporation, PEG #300, an average molecular weight of 300, liquid at 150°C under normal pressure]

In examples and comparative examples, physical property measurements and evaluations were carried out by the following procedures.

[Measurement of melting point of polypropylene resin composition]

With a differential scanning calorimeter [manufactured by Seiko Instruments, model DSC6200], 5 to 6 mg of a polypropylene resin as a substrate resin was melted by increasing the temperature at a temperature increase rate of 10°C/min from 40°C to 220°C, then the melted resin was crystallized by decreasing the temperature at a temperature decrease rate of 10°C/min from 220°C to 40°C, and the temperature was increased at a temperature increase rate of 10°C/min from 40°C to 220°C. On the DSC curve obtained, the melting peak temperature in the second temperature increase was regarded as the melting point.

[Melt index of electroconductive polypropylene resin composition]

The melt index of an obtained electroconductive polypropylene resin composition was determined with an MI measurement apparatus described in JIS K7210: 1999 in conditions of an orifice size of 2.0959 ± 0.005 mmφ, an orifice length of 8.000 ± 0.025 mm, a load of 5,000 g, and a temperature of 230 ± 0.2°C.

[Average bubble size of electroconductive polypropylene resin foamed particles]

Substantially the center of an electroconductive polypropylene resin foamed particle was cut with careful attention not to break bubble films (cell films) of the foamed particle, and the cut section was observed under a microscope [manufactured by Keyence Corporation: VHX digital microscope] (an observation photograph was taken).
On the observation photograph with the microscope, a line segment corresponding to a length of 1,000 pm was drawn except the surface layer part of the foamed particle. The number n of bubbles through which the line segment passes was counted, and then the bubble size (= 1,000/n (μm)) was calculated. The same operation was carried out with respect to 10 foamed particles, and the average of the respective bubble sizes calculated was regarded as the average bubble size of the electroconductive polypropylene resin foamed particles.

[Expansion ratio of electroconductive polypropylene resin foamed particles]

The weight w (g) of electroconductive polypropylene resin foamed particles was determined. The electroconductive polypropylene resin foamed particles were then immersed in ethanol, and the increase in volume (ethanol submergence volume) v (cm$^3$) was determined. The expansion ratio was calculated in accordance with the following expression by using the density d (g/cm$^3$) of the electroconductive polypropylene resin before foaming.

$$\text{Expansion ratio} = d \times v/w$$

The density d of an electroconductive polypropylene resin before foaming strictly varies with the amounts and types of additives contained, but in the present invention, "d = 0.9 g/cm$^3$".

[Measurement of DSC ratio of electroconductive polypropylene resin foamed particles]

From the DSC curve obtained when the temperature of 5 to 6 mg of obtained electroconductive polypropylene resin foamed particles was increased with a differential scanning calorimeter [manufactured by Seiko Instruments, model DSC6200] at a temperature increase rate of 10°C/min from 40°C to 220°C, the DSC ratio was calculated.
Specifically, based on the DSC curve having two melting peaks as shown in Fig. 1, the ratio of the melting peak at the high temperature side "{Qh/(Q1 + Qh)} × 100" was calculated from the heat quantity Q1 of the melting peak at the low temperature side, that is, the heat quantity surrounded by the DSC curve of the low temperature peak and a tangent line drawn from a maximum point between the low temperature peak and the high temperature peak to a melting start base line, and from the heat quantity Qh of the melting peak at the high temperature side, that is, the heat quantity surrounded by the DSC curve of the high temperature peak and a tangent line drawn from a maximum point between the low temperature peak and the high temperature peak to a melting end base line.

[Measurement of DSC ratio of electroconductive polypropylene resin in-mold foam molded article]

From an obtained electroconductive polypropylene resin in-mold foam molded article, 5 to 6 mg of a sample was cut out. The ratio of the melting peak at the high temperature side "{qh/(ql + qh)} × 100" was then calculated in the same manner as in the measurement of DSC ratio of electroconductive polypropylene resin foamed particles except the sample was used in place of the electroconductive polypropylene resin foamed particles.

[Open-cell ratio of electroconductive polypropylene resin foamed particles]

With an air pycnometer [manufactured by Beckmann, model 930], the true volume Vo (cm$^3$) of pre-foamed particles was determined in accordance with PROCEDURE C in ASTM D2856-87. Separately, the ethanol submergence volume $V_1$ (cm$^3$) of the same sample was determined. The open-cell ratio was calculated in accordance with the following expression.

$$\text{Open-cell ratio (\%)} = \{(V_1 - V_0)/V_1\} \times 100$$

[Bulk density of electroconductive polypropylene resin foamed particles]

Obtained electroconductive polypropylene resin foamed particles were slowly added and filled into a container having a volume of about 5 L, and the electroconductive polypropylene resin foamed particles in the container were weighed. The weight was divided by the volume of the container, giving a bulk density (g/L).

[Molded article density of electroconductive polypropylene resin in-mold foam molded article]

From substantially the center in a thickness direction of an obtained electroconductive polypropylene resin in-mold foam molded article, five test pieces each having a rectangular parallelepiped shape with a length of 150 mm, a width of 50 mm, and a thickness of 12 mm were cut out (without the skin layer) for UL94 HBF test. The weight, the length, the width, and the thickness of the cut out test piece were then measured. The product of the length, the width, and the thickness was calculated as the volume of the test piece, and the weight was divided by the volume. The average of five test pieces was regarded as the molded article density (g/L).

[Evaluation of fusion properties of electroconductive polypropylene resin in-mold foam molded article]

An obtained electroconductive polypropylene resin in-mold foam molded article was cut in a thickness direction with a cutter knife to make an incision with a size of about 3 mm, then the electroconductive polypropylene resin in-mold foam molded article was broken from the incision by hand, and the broken-out section was observed.
The ratio of the number of broken electroconductive polypropylene resin foamed particles relative to the number of electroconductive polypropylene resin foamed particles included in the broken-out section was determined as a fusion ratio (%), and the fusion properties were evaluated on the basis of the following criteria.

○ : The fusion ratio is 60% or more.
× : The fusion ratio is less than 60%.

[Evaluation of surface nature of electroconductive polypropylene resin in-mold foam molded article]

The surface of an obtained electroconductive polypropylene resin in-mold foam molded article was visually observed, and the surface nature was evaluated on the basis of the following criteria. The evaluation results are indicated by "○", Δ or "×".

○ : The surface has almost no wrinkles, sink marks, or voids.
Δ: The surface has at least any of a few wrinkles, a few sink marks, and a few voids.
×: The surface has at least any of marked wrinkles, marked sink marks, and marked voids.

Here, the void means a clearance among foamed resin particles fused to each other on the surface of an in-mold foam molded article.

[Evaluation of electric conductivity of electroconductive polypropylene resin in-mold foam molded article]

The volume resistivity of an obtained electroconductive polypropylene resin in-mold foam molded article was determined in accordance with JIS K7194-1994 by using a resistivity meter [manufactured by Mitsubishi Chemical Analytech Co., Ltd., "Loresta GP"], and the electric conductivity was evaluated on the basis of the following criteria. The evaluation results are indicated by "○", "Δ", or "×".

○ : The volume resistivity is 2,000 $\Omega$ • cm or less.
Δ : The volume resistivity is more than 2,000$\Omega$ • cm and not more than 5,000$\Omega$ • cm.
× : The volume resistivity is more than 5,000$\Omega$ • cm.

[Evaluation of flame retardancy of electroconductive polypropylene resin in-mold foam molded article]

From substantially the center in a thickness direction of an obtained electroconductive polypropylene resin in-mold foam molded article, a test piece having a rectangular parallelepiped shape with a length of 150 mm, a width of 50 mm, and a thickness of 12 mm was cut out (without the skin layer) for the standard for flame retardancy, UL94 HBF test.
The obtained test piece was subjected to the standard for flame retardancy, UL94 HBF test, and the flame retardancy was evaluated on the basis of the following criteria. The evaluation results are indicated by "◎", "×". "○", or ×".

◎: The advanced standard of HBF test is satisfied (the burning rate between 100-mm marked lines is less than 35 mm/min).
○: The standard of HBF test is satisfied (the burning rate between 100-mm marked lines is 35 mm/min or more and 40 mm/min or less or a burning distance is less than 125 mm).
× : The standard of HBF test is not satisfied.

Examples and comparative examples of the present invention will next be specifically described.

(Example 1)

[Production of electroconductive polypropylene resin particles]

To 100 parts by weight of ethylene-propylene random copolymer A (a melting point of 141°C, a melt index of 7 g/10 min at a load of 2,160 g, an ethylene content of 3% by weight), 13 parts by weight of ENSACO 350G (a DBP absorption amount of 320 cm$^3$/100 g, a BET specific surface area of 770 m$^2$/g) as an electroconductive carbon black was added, and the whole was mixed with a Banbury mixer, giving an electroconductive polypropylene resin composition.
Next, the obtained electroconductive polypropylene resin composition was placed in a twin-serew extruder with a 45-mm$\varphi$ opening [manufactured by ON Machinery, TEK 45-mm extruder], then melted and kneaded at a resin temperature of 220°C, and extruded into strands with a circular die attached to the tip of the twin-screw extruder. The strands were cooled with water and then cut with a pelletizer, giving electroconductive polypropylene resin particles having a particle weight of about 1.8 mg. During the melting and kneading in the twin-screw extruder, polyethylene glycol as a bubble size enlarging agent was added so as to give an amount of 0.5 parts by weight relative to 100 parts by weight of the ethylene-propylene random copolymer.

[Production of electroconductive polypropylene resin foamed particles]

In a pressure-resistant autoclave having a volume of 10 L, 100 parts by weight of the obtained electroconductive polypropylene resin particles, 170 parts by weight of water, 2.0 parts by weight of tribasic calcium phosphate as an inorganic dispersant, and 0.075 parts by weight of sodium alkylsulfonate as a dispersion assistant were placed, and 5.0 parts by weight of carbon dioxide (carbon dioxide gas) as a foaming agent was added with stirring.

The contents in the autoclave were heated to a foaming temperature of 147°C, and carbon dioxide (carbon dioxide gas) was further added to adjust the autoclave internal pressure to 3.0 MPa (gauge pressure). The conditions were maintained for 30 minutes, and then a valve at a lower part of the autoclave was opened. Through a 3.6-mm$\varphi$ open orifice, the contents in the autoclave were discharged into an atmosphere, giving one-step foamed particles. At the time, carbon dioxide was injected under pressure from the upper part of the autoclave to apply back pressure so as to keep a constant foaming pressure.

The obtained one-step foamed particles had an average bubble size of 130 pm, an expansion ratio of 14, a DSC ratio of 12%, and an open-cell ratio of 1.4%.

An internal pressure of 0.26 MPa (absolute pressure) was applied into the obtained one-step foamed particles by air impregnation, and the particles were heated by water vapor at 0.06 MPa (gauge pressure), giving two-step foamed particles having an average bubble size of 150 $\mu$m, a bulk density of 30 g/L, a DSC ratio of 12%, and an open-cell ratio of 1.5%.

[Production of electroconductive polypropylene resin in-mold foam molded article]

Next, with a polyolefin foam molding machine [manufactured by DAISEN Co., Ltd., KD-345], a mold having a box shape with a length of 300 mm, a width of 400 mm, and a thickness of 50 mm was filled with the two-step foamed particles (electroconductive polypropylene resin foamed particles) that had been adjusted so as to have an internal air pressure (internal pressure of foamed particles) of 0.20 MPa (absolute pressure). The particles were heated and molded at a heated vapor pressure (vapor pressure) for molding of 0.30 MPa (gauge pressure) while compressed by 10% in the thickness direction, giving an electroconductive polypropylene resin in-mold foam molded article.

The obtained electroconductive polypropylene resin in-mold foam molded article was allowed to stand at room temperature (25°C) for 1 hour, and then was dried and aged for 3 hours in a thermostatic chamber at 75°C. The molded article was taken out of the thermostatic chamber, and then further allowed to stand at room temperature for 24 hours. The molded article density and the DSC ratio of the electroconductive polypropylene resin in-mold foam molded article were determined, and the fusion properties, the surface nature, the electric conductivity, and the flame retardancy were evaluated. Table 1 shows these measurement and evaluation results.

(Examples 2, 3, 5 and 6 and comparative example 4')

[Production of electroconductive polypropylene resin particles]

Electroconductive polypropylene resin particles were obtained by carrying out the same operations as in Example 1 except that the types and the amounts of the electroconductive carbon black and the bubble size enlarging agent were changed as described in Table 1.

[Production of electroconductive polypropylene resin foamed particles]

One-step foamed particles and two-step foamed particles (electroconductive polypropylene resin foamed particles) were obtained by carrying out the same operations as in Example 1 except that the foaming conditions (internal pressure of foamed particles and vapor pressure) for two-step foaming were changed to the conditions described in Table 1 in order to achieve an intended bulk density (about 30 g/L, or about 40 g/L in Example 5) of pre-foamed particles (two-step foamed particles) to be obtained. Table 1 shows the measurement results of the obtained one-step foamed particles and the two-step foamed particles.

[Production of electroconductive polypropylene resin in-mold foam molded article]

Electroconductive polypropylene resin in-mold foam molded articles were obtained from the obtained two-step foamed particles by carrying out the same operations as in Example 1. Table 1 shows the measurement and evaluation results of the obtained electroconductive polypropylene resin in-mold foam molded articles.

(Comparative Examples 1 to 6)

[Production of electroconductive polypropylene resin particles]

Electroconductive polypropylene resin particles were obtained by carrying out the same operations as in Example 1 except that the types and the amounts of the polypropylene resin, the electroconductive carbon black, and the bubble size enlarging agent were changed as described in Table 1.

[Production of electroconductive polypropylene resin foamed particles]

One-step foamed particles and two-step foamed particles (electroconductive polypropylene resin foamed particles) were obtained by carrying out the same operations as in Example 1 except that polypropylene resin B was used and the foaming temperature was changed to 149°C in order to achieve an intended DSC ratio in Comparative Example 1 and that the foaming conditions (internal pressure of foamed particles and vapor pressure) for two-step foaming were changed to the conditions described in Table 1 in order to achieve an intended bulk density (about 30 g/L) of pre-foamed particles (two-step foamed particles) to be obtained in Comparative Examples 1 to 6. Table 1 shows the measurement results of the obtained one-step foamed particles and the two-step foamed particles.

[Production of electroconductive polypropylene resin in-mold foam molded article]

Electroconductive polypropylene resin in-mold foam molded articles were obtained from the obtained two-step foamed particles by carrying out the same operations as in Example 1.
Table 1 shows the measurement and evaluation results of the obtained electroconductive polypropylene resin in-mold foam molded articles. Example 4 in table 1 is comparative.

[Table 1]

| | | | Example | | | | | | Comparative Example | | | | | |
|---|---|---|---|---|---|---|---|---|---|---|---|---|---|---|
| | | | 1 | 2 | 3 | 4 | 5 | 6 | 1 | 2 | 3 | 4 | 5 | 6 |
| Polypropylene resin | Ethylene-propytene random copolymer A | parts by weight | 100 | 100 | 1,00 | 100 | 100 | 100 | | 100 | 100 | 100 | 100 | 100 |
| | Ethylene-propylene random copolymer B | parts by weight | | | | | | | 100 | | | | | |
| Electroconductive carbon black | ENSACO 350G | parts by weight | 13 | 18 | 23 | 18 | 18 | | 18 | 9 | | | | |
| | BlackPearls 2000 | parts by weight | | | | | | 18 | | | | | | |
| | Ketjen Black | parts by weight | | | | | | | | | 18 | | | |
| | ENSACO 260G | parts by weight | | | | | | | | | | 18 | | |
| | Denka Black 35 | parts by weight | | | | | | | | | | | 18 | |
| | Vulcan XC72 | parts by weight | | | | | | | | | | | | 18 |
| | Carbon black properties | (DBP absorption amount) | $cm^3/100g$ | 320 | 320 | 320 | 320 | 320 | 330 | 320 | 320 | 495 | 190 | 220 | 174 |
| | | (BET specific surface area) | $m^2/g$ | 770 | 770 | 770 | 770 | 770 | 1475 | 770 | 770 | 1270 | 70 | 133 | 254 |
| Bubble size enlarging agent | Polyethylene ycol (average molecular weight: 300) | parts by weight | 0.5 | 0.5 | 0.5 | - | 0.5 | 0.5 | 0,5 | 0,5 | 0.5 | 0.5 | 0.5 | 0.5 |
| MI of electroconductive polypropylene resin composition (measured at a load of 5,000 g at 230 °C) | | g/10 min | 2.9 | 18 | 1,2 | 1.8 | 1,8 | 1,9 | 0.3 | 4.5 | 0,8 | 90 | 8.5 | 11 |
| Particle weight of polypropylene sin particle | | mg/particle | 1.8 | 1.8 | 1.8 | 1.8 | 1,8 | 1.8 | 1.8 | 1.8 | 1.8 | 1.8 | 1.8 | 1.8 |

EP 3 015 497 B1

(continued)

| | | | | Example | | | | | | Comparative Example | | | | | |
|---|---|---|---|---|---|---|---|---|---|---|---|---|---|---|---|
| | | | | 1 | 2 | 3 | 4 | 5 | 6 | 1 | 2 | 3 | 4 | 5 | 6 |
| Polypropylene foamed particles | One-step foaming conditions | Amount of carbon dioxide | parts by weight | 5.0 | 5.0 | 5.0 | 5.0 | 5.0 | 5.0 | 5.0 | 5.0 | 5.0 | 5.0 | 5,0 | 5.0 |
| | | Foaming temperature | °C | 147 | 147 | 147 | 147 | 147 | 147 | 149 | 147 | 147 | 147 | 147 | 147 |
| | | Foaming pressure (gauge pressure) | MPa | 3.0 | 3.0 | 3.0 | :30 | 3.0 | 3.0 | 3.0 | 3.0 | 3.0 | 3.0 | 3.0 | 3.0 |
| | One-step foamed particles | Average bubble size | mm | 0.13 | 0.12 | 0.11 | 0,09 | 0,12 | 0.11 | 0.10 | 0.12 | 0,09 | 0.10 | 0,12 | 0.10 |
| | | Expansion ratio | - | 14 | 13 | 13 | 12 | 13 | 12 | 10 | 14 | 11 | 16 | 15 | 13 |
| | | DSC ratio | % | 12 | 12 | 11 | 11 | 12 | 13 | 11 | 12 | 12 | 13 | 13 | 14 |
| | | Open-cell ratio | % | 14 | 1.5 | 1.5 | 1.2 | 1.5 | 1.2 | 1.3 | 1.4 | 1.8 | 1.3 | 1.3 | 1.5 |
| | Two-step foaming conditions | Foamed particle internal pressure (absolute pressure) | MPa | 0.26 | 0.26 | 0.26 | 0.26 | 0.20 | 0.26 | 0.35 | 0.26 | 0.26 | 0.26 | 0.26 | 0.26 |
| | | Vapor pressure (gauge pressure) | MPa | 0.06 | 0.07 | 0.07 | 0.09 | 0,06 | 0.08 | 0.07 | 0.05 | 0.08 | 0.05 | 0.05 | 0.07 |
| | Two-step foamed particles | Average bubble size | mm | 0.15 | 0.15 | 0.14 | 0.10 | 0.14 | 0.13 | 0.11 | 0.13 | 0.11 | 0.14 | 0.15 | 0.13 |
| | | Bulk density | g/L | 30 | 30 | 30 | 30 | 40 | 30 | 30 | 30 | 30 | 30 | 30 | 30 |
| | | DSC ratio | % | 12 | 12 | 11 | 12 | 12 | 13 | 11 | 12 | 12 | 13 | 13 | 14 |
| | | Open-cell ratio | % | 1.5 | 1.6 | 1.5 | 1.4 | 1.7 | 1.2 | 1.6 | 1.7 | 1.9 | 1.5 | 1.3 | 1.7 |

EP 3 015 497 B1

18

(continued)

| Polypropylene in-mold foam molded article | | | | Example | | | | | | Comparative Example | | | | | |
|---|---|---|---|---|---|---|---|---|---|---|---|---|---|---|---|
| | | | | 1 | 2 | 3 | 4 | 5 | 6 | 1 | 2 | 3 | 4 | 5 | 6 |
| | Molding conditions | Foamed particle internal pressure (absolute pressure) | MPa | 0.20 | 0.20 | 0.20 | 0,20 | 0.20 | 0.20 | 0.20 | 0.20 | 0.20 | 0.20 | 0.20 | 0.20 |
| | | Vapor pressure (gauge pressure) | MPa | 0.30 | 0.30 | 0.30 | 0.30 | 0.30 | 0.30 | 0.30 | 0.30 | 0.30 | 0.30 | 0.30 | 0.30 |
| | In-mold foam molded article | Molded article density | g/L | 30 | 30 | 30 | 30 | 40 | 30 | 30 | 30 | 30 | 30 | 30 | 30 |
| | | DSC ratio | % | 11 | 11 | 10 | 11 | 11 | 12 | 10 | 11 | 11 | 12 | 12 | 13 |
| | | Fusion properties | - | ○ | ○ | ○ | ○ | ○ | ○ | ○ | ○ | ○ | ○ | ○ | ○ |
| | | Surface nature | - | ○ | ○ | ○ | ○ | ○ | ○ | × | ○ | Δ | ○ | ○ | ○ |
| | | Electric conductivity | - | ○ | ○ | ◎ | ○ | ○ | ○ | ○ | × | ○ | ○ | ○ | ○ |
| | | Flame retardancy | - | ○ | ○ | ○ | ○ | ◎ | ◎ | ◎ | × | ◎ | × | × | × |

Industrial Applicability

The electroconductive polypropylene resin in-mold foam molded article of the present invention has excellent electric conductivity and flame retardancy and thus can be suitably used for cushioning materials for electronic devices and precision apparatuses, a parts tray of a robotized line, and radio wave absorbers used for suppressing radiation noises or radio reflection of anechoic chambers and electronic devices, for example.

**Claims**

1. Electroconductive polypropylene resin foamed particles produced by foaming electroconductive polypropylene resin particles including an electroconductive polypropylene resin composition containing 11 parts by weight or more and 25 parts by weight or less of an electroconductive carbon black relative to 100 parts by weight of a polypropylene resin, the electroconductive polypropylene resin composition having a melt index of 1.0 g/10 min or more and 4.0 g/10 min or less where the melt index is determined at a load of 5,000 g at 230 $\pm$ 0.2°C,
   wherein the melt index is determined with an MI measurement apparatus described in JIS K7210: 1999, and
   wherein the electroconductive polypropylene resin particles contain, relative to 100 parts by weight of the polypropylene resin, a bubble size enlarging agent in an amount of 0.01 parts by weight or more and 10 parts by weight or less.

2. The electroconductive polypropylene resin foamed particles according to claim 1, wherein the bubble size enlarging agent is selected from polyethylene glycol and glycerin.

3. The electroconductive polypropylene resin foamed particles according to claim 1 or 2, wherein the foamed particles are foamed with an inorganic physical foaming agent including carbon dioxide.

4. The electroconductive polypropylene resin foamed particles according to any one of claims 1 to 3, wherein the foamed particles have a bulk density of 30 g/L or more and 45 g/L or less, wherein bulk density (g/L) was obtained by filling electroconductive polypropylene resin foamed particles into a container having a volume of about 5 L, weighing the electroconductive polypropylene resin foamed particles in the container and dividing the weight by the volume of the container.

5. The electroconductive polypropylene resin foamed particles according to any one of claims 1 to 4, wherein the foamed particles have two melting peaks in measurement by differential scanning calorimetry, and a ratio of the melting peak at a high temperature side, $\{Qh/(Q1 + Qh)\} \times 100$, calculated from a heat quantity Q1 of the melting peak at a low temperature side and a heat quantity Qh of the melting peak at the high temperature side is 8% or more and less than 25%, wherein Q1 is the heat quantity surrounded by the DSC curve of the low temperature peak and a tangent line drawn from a maximum point between the low temperature peak and the high temperature peak to a melting start base line, and wherein the heat quantity Qh is the heat quantity surrounded by the DSC curve of the high temperature peak and a tangent line drawn from a maximum point between the low temperature peak and the high temperature peak to a melting end base line, and
   wherein the DSC curve is obtained when the temperature of the electroconductive polypropylene resin foamed particles is increased with a differential scanning calorimeter at a temperature increase rate of 10°C/min from 40°C to 220°C.

6. An electroconductive polypropylene resin in-mold foam molded article produced from the electroconductive polypropylene resin foamed particles according to any one of claims 1 to 5, the electroconductive polypropylene resin in-mold foam molded article having a volume resistivity value of 10Ω•cm or more and 5,000Ω•cm or less, wherein the volume resistivity of an obtained electroconductive polypropylene resin in-mold foam molded article is determined in accordance with JIS K7194-1994 by using a resistivity meter.

7. The electroconductive polypropylene resin in-mold foam molded article according to claim 6, wherein the molded article passes UL94 HBF flammability test.

8. The electroconductive polypropylene resin in-mold foam molded article according to claim 6 or 7, wherein the molded article has a molded article density of 30 g/L or more and 45 g/L or less, wherein the molded article density was obtained by cutting out five test pieces each having a rectangular parallelepiped shape with a length of 150 mm, a width of 50 mm, and a thickness of 12 mm were cut out (without the skin layer) for an UL94 HBF test from substantially the center in a thickness direction of the electroconductive polypropylene resin in-mold foam molded article, measuring the weight, the length, the width, and the thickness of the cut out test piece, calculating the product of the length, the width, and the thickness as the volume of the test piece, dividing the weight by the volume and taking the average of five test pieces as the molded article density (g/L).

9. The electroconductive polypropylene resin in-mold foam molded article according to any one of claims 6 to 8, wherein the molded article has two melting peaks in measurement by differential scanning calorimetry, and a ratio of the melting peak at a high temperature side, $\{qh/(ql + qh)\} \times 100$, calculated from a heat quantity ql of the melting peak at a low temperature side and a heat quantity qh of the melting peak at the high temperature side is 8% or more and less than 25%, ql is the heat quantity surrounded by the DSC curve of the low temperature peak and a tangent line drawn from a maximum point between the low temperature peak and the high temperature peak to a melting start base line and qh is the heat quantity surrounded by the DSC curve of the high temperature peak and a tangent line drawn from a maximum point between the low temperature peak and the high temperature peak to a melting end base line, and
wherein the DSC curve is obtained when the temperature of the electroconductive polypropylene resin foamed particles is increased with a differential scanning calorimeter at a temperature increase rate of 10°C/min from 40°C to 220°C.

10. A method for producing electroconductive polypropylene resin foamed particles, the method comprising a one-step foaming process including placing electroconductive polypropylene resin particles, water, and a foaming agent in a pressure-resistant container, dispersing the contents in the pressure-resistant container under stirring and increasing a temperature of the contents to a temperature equal to or higher than a softening point of the electroconductive polypropylene resin particles, and then discharging the dispersion liquid in the pressure-resistant container into an area having a pressure lower than an internal pressure of the pressure-resistant container to foam the electroconductive polypropylene resin particles,
the electroconductive polypropylene resin particles including an electroconductive polypropylene resin composition that contains 11 parts by weight or more and 25 parts by weight or less of an electroconductive carbon black relative to 100 parts by weight of a polypropylene resin and has a melt index of 0.5 g/10 min or more and 4.0 g/10 min or less where the melt index is determined at a load of 5,000 g at $230 \pm 0.2$°C,
wherein the melt index is determined with an MI measurement apparatus described in JIS K7210: 1999, and
wherein the electroconductive polypropylene resin particles contain, relative to 100 parts by weight of the polypropylene resin, a bubble size enlarging agent in an amount of 0.01 parts by weight or more and 10 parts by weight or less.

11. The method for producing electroconductive polypropylene resin foamed particles according to claim 10, wherein the foaming agent includes an inorganic physical foaming agent including carbon dioxide.

12. The method for producing electroconductive polypropylene resin foamed particles according to claim 10 or 11, wherein the bubble size enlarging agent is selected from polyethylene glycol and glycerin.

**Patentansprüche**

1. Elektrisch leitfähige Polypropylenharzschaumteilchen, hergestellt durch Schäumen von elektrisch leitfähigen Polypropylenharzteilchen, die eine elektrisch leitfähige Polypropylenharzzusammensetzung enthalten, die 11 Gewichtsteile oder mehr und 25 Gewichtsteile oder weniger eines elektrisch leitfähigen Carbon Black enthält, bezogen auf 100 Gewichtsteile eines Polypropylenharzes,
wobei die elektrisch leitfähige Polypropylenharzzusammensetzung einen Schmelzindex von 1,0 g/10 Min oder mehr und 4,0 g/10 Min oder weniger aufweist, wobei der Schmelzindex bei einer Belastung von 5.000 g bei $230 \pm 0,2$°C bestimmt wird,
wobei der Schmelzindex mit einem in JIS K7210: 1999 beschriebenen MI-Messgerät gemessen wird, und
wobei die elektrisch leitfähigen Polypropylenharzteilchen, bezogen auf 100 Gewichtsteile des Polypropylenharzes, ein Mittel zur Vergrößerung der Blasengröße in einer Menge von 0,01 Gewichtsteilen oder mehr und 10 Gewichtsteilen oder weniger enthalten.

2. Die elektrisch leitfähigen Polypropylenharzschaumteilchen nach Anspruch 1, wobei das Mittel zur Vergrößerung der Blasengröße ausgewählt ist aus Polyethylenglykol und Glycerin.

3. Die elektrisch leitfähigen Polypropylenharzschaumteilchen nach Anspruch 1 oder 2, wobei die Schaumteilchen mit einem anorganischen physikalischen Schaumbildner, der Kohlenstoffdioxid enthält, geschäumt werden.

**4.** Die elektrisch leitfähigen Polypropylenharzschaumteilchen nach einem der Ansprüche 1 bis 3, wobei die Schaumteilchen eine Schüttdichte von 30 g/l oder mehr und 45 g/l oder weniger aufweisen, wobei die Schüttdichte (g/l) erhalten wurde durch Einfüllen von elektrisch leitfähigen Polypropylenharzschaumteilchen in einen Behälter mit einem Volumen von etwa 5 l, Wiegen der elektrisch leitfähigen Polypropylenharzschaumteilchen in dem Behälter und Teilen des Gewichts durch das Volumen des Behälters.

**5.** Die elektrisch leitfähigen Polypropylenharzschaumteilchen nach einem der Ansprüche 1 bis 4, wobei die Schaumteilchen zwei Schmelzpeaks bei der Messung durch Differential-Scanning-Kalorimetrie aufweisen und ein Verhältnis des Schmelzpeaks auf einer Hochtemperaturseite, {Qh/(Ql + Qh)} × 100, berechnet aus einer Wärmemenge Ql des Schmelzpeaks auf der Niedertemperaturseite und einer Wärmemenge Qh des Schmelzpeaks auf der Hochtemperaturseite, 8 % oder mehr und weniger als 25 % beträgt, wobei Ql die Wärmemenge ist, die von der DSC-Kurve des Niedertemperaturpeaks und einer Tangente, die von einem Maximalpunkt zwischen dem Niedertemperaturpeak und dem Hochtemperaturpeak zu einer Grundlinie am Anfang des Schmelzens gezogen wird, umgeben ist, und wobei die Wärmemenge Qh die Wärmemenge ist, die von der DSC-Kurve des Hochtemperaturpeaks und einer Tangente, die von einem Maximalpunkt zwischen dem Niedertemperaturpeak und dem Hochtemperaturpeak zu einer Grundlinie am Ende des Schmelzens gezogen wird, umgeben ist, und wobei die DSC-Kurve erhalten wird, wenn die Temperatur der elektrisch leitfähigen Polypropylenharzschaumteilchen mit einem Differential-Scanning-Kalorimeter bei einer Temperaturanstiegsgeschwindigkeit von 10°C/Min von 40°C auf 220°C erhöht wird.

**6.** Ein in der Form geschäumter Formkörper aus elektrisch leitfähigem Polypropylenharz, hergestellt aus den elektrisch leitfähigen Polypropylenharzschaumteilchen nach einem der Ansprüche 1 bis 5, wobei der in der Form geschäumte Formkörper aus elektrisch leitfähigem Polypropylenharz einen spezifischen Volumenwiderstandswert von 10Ω•cm oder mehr und 5.000Ω•cm oder weniger aufweist, wobei der spezifische Volumenwiderstand eines erhaltenen in der Form geschäumten Formkörpers aus elektrisch leitfähigem Polypropylenharz gemäß JIS K7194-1994 unter Verwendung eines Widerstandsmessers bestimmt wird.

**7.** Der in der Form geschäumte Formkörper aus elektrisch leitfähigem Polypropylenharz nach Anspruch 6, wobei der Formkörper eine UL94 HBF-Brandprüfung besteht.

**8.** Der in der Form geschäumte Formkörper aus elektrisch leitfähigem Polypropylenharz nach Anspruch 6 oder 7, wobei der Formkörper eine Dichte des Formkörpers von 30 g/l oder mehr und 45 g/l oder weniger aufweist, wobei die Dichte des Formkörpers durch Ausschneiden von fünf Prüfkörpern erhalten wurde, von denen jedes eine rechteckige Parallelepipedform mit einer Länge von 150 mm, einer Breite von 50 mm und einer Dicke von 12 mm aufweist, die (ohne die Hautschicht) für eine UL94 HBF-Prüfung im Wesentlichen von der Mitte in einer Dickenrichtung des in der Form geschäumten Formkörpers aus elektrisch leitfähigem Polypropylenharz ausgeschnitten wurden, wobei das Gewicht, die Länge, die Breite und die Dicke des ausgeschnittenen Prüfkörpers gemessen werden, das Produkt aus Länge, Breite und Dicke als Volumen des Prüfkörpers berechnet wird, das Gewicht durch das Volumen dividiert wird und der Durchschnitt von fünf Prüfkörpern als Formkörperdichte (g/l) genommen wird.

**9.** Der in der Form geschäumte Formkörper aus elektrisch leitfähigem Polypropylenharz nach einem der Ansprüche 6 bis 8, wobei der Formkörper zwei Schmelzpeaks bei der Messung durch Differential-Scanning-Kalorimetrie aufweisen und ein Verhältnis des Schmelzpeaks auf einer Hochtemperaturseite, {qh/(ql + qh)} × 100, berechnet aus einer Wärmemenge ql des Schmelzpeaks auf der Niedertemperaturseite und einer Wärmemenge qh des Schmelzpeaks auf der Hochtemperaturseite, 8 % oder mehr und weniger als 25 % beträgt, wobei ql die Wärmemenge ist, die von der DSC-Kurve des Niedertemperaturpeaks und einer Tangente, die von einem Maximalpunkt zwischen dem Niedertemperaturpeak und dem Hochtemperaturpeak zu einer Grundlinie am Anfang des Schmelzens gezogen wird, umgeben ist, und wobei die Wärmemenge qh die Wärmemenge ist, die von der DSC-Kurve des Hochtemperaturpeaks und einer Tangente, die von einem Maximalpunkt zwischen dem Niedertemperaturpeak und dem Hochtemperaturpeak zu einer Grundlinie am Ende des Schmelzens gezogen wird, umgeben ist, und wobei die DSC-Kurve erhalten wird, wenn die Temperatur der elektrisch leitfähigen Polypropylenharzschaumteilchen mit einem Differential-Scanning-Kalorimeter bei einer Temperaturanstiegsgeschwindigkeit von 10°C/Min von 40°C auf 220°C erhöht wird.

**10.** Ein Verfahren zur Herstellung von elektrisch leitfähigen Polypropylenharzschaumteilchen, wobei das Verfahren einen einstufigen Schäumungsprozess umfasst, der das Einbringen von elektrisch leitfähigen Polypropylenharzteilchen, Wasser und einem Schaumbildner in einen druckbeständigen Behälter, das Dispergieren des Inhalts in dem druckbeständigen Behälter unter Rühren und das Erhöhen der Temperatur des Inhalts auf eine Temperatur, die gleich oder höher als der Erweichungspunkt der elektrisch leitfähigen Polypropylenharzteilchen ist, und dann das Ablassen der Dispersionsflüssigkeit in dem druckbeständigen Behälter in einen Bereich mit einem Druck, der niedriger als der Innendruck des druckbeständigen Behälters ist, um die elektrisch leitfähigen Polypropylenharzteilchen aufzuschäumen, umfasst,

wobei die elektrisch leitfähigen Polypropylenharzteilchen eine elektrisch leitfähige Polypropylenharzzusammensetzung enthalten, die 11 Gewichtsteile oder mehr und 25 Gewichtsteile oder weniger eines elektrisch leitfähigen Carbon Black enthält, bezogen auf 100 Gewichtsteile eines Polypropylenharzes, und einen Schmelzindex von 0,5 g/10 Min oder mehr und 4,0 g/10 Min oder weniger aufweist, wobei der Schmelzindex bei einer Belastung von 5.000 g bei 230 ± 0,2°C bestimmt wird,

wobei der Schmelzindex mit einem in JIS K7210: 1999 beschriebenen MI-Messgerät gemessen wird, und wobei die elektrisch leitfähigen Polypropylenharzteilchen, bezogen auf 100 Gewichtsteile des Polypropylenharzes, ein Mittel zur Vergrößerung der Blasengröße in einer Menge von 0,01 Gewichtsteilen oder mehr und 10 Gewichtsteilen oder weniger enthalten.

11. Das Verfahren zur Herstellung von elektrisch leitfähigen Polypropylenharzschaumteilchen nach Anspruch 10, wobei der Schaumbildner einen anorganischen physikalischen Schaumbildner enthält, der Kohlenstoffdioxid enthält.

12. Das Verfahren zur Herstellung von elektrisch leitfähigen Polypropylenharzschaumteilchen nach Anspruch 10 oder 11, wobei das Mittel zur Vergrößerung der Blasengröße ausgewählt ist aus Polyethylenglykol und Glycerin.

**Revendications**

1. Particules électro-conductrices expansées de résine de polypropylène produites en faisant mousser des particules électro-conductrices de résine de polypropylène comprenant une composition électro-conductrice de résine de polypropylène contenant 11 parties en poids ou plus et 25 parties en poids ou moins d'un noir de carbone électro-conducteur par rapport à 100 parties en poids d'une résine de polypropylène,

la composition électro-conductrice de résine de polypropylène présentant un indice de fluidité de 1,0 g / 10 min ou plus et 4,0 g / 10 min ou moins où l'indice de fluidité est déterminé à une charge de 5000 g à 230 ± 0,2 °C,

où l'indice de fluidité est déterminé avec un appareil de mesure d'indice de fluidité décrit dans JIS K7210 : 1999, et où les particules électro-conductrices de résine de polypropylène contiennent, par rapport à 100 parties en poids de la résine de polypropylène, un agent d'agrandissement de taille de bulles en une quantité de 0,01 partie en poids ou plus et de 10 parties en poids ou moins.

2. Particules électro-conductrices expansées de résine de polypropylène selon la revendication 1, dans lesquelles l'agent d'agrandissement de taille de bulles est choisi parmi le polyéthylène glycol et la glycérine.

3. Particules électro-conductrices expansées de résine de polypropylène selon la revendication 1 ou 2, dans lesquelles les particules expansées sont expansées avec un agent moussant physique inorganique comprenant du dioxyde de carbone.

4. Particules électro-conductrices expansées de résine de polypropylène selon l'une quelconque des revendications 1 à 3, dans lesquelles les particules expansées ont une densité apparente de 30 g/L ou plus et 45 g/L ou moins, dans lesquelles la densité apparente (g/L) a été obtenue en remplissant des particules électro-conductrices expansées de résine de polypropylène dans un récipient présentant un volume d'environ 5 L, en pesant les particules électro-conductrices expansées de résine de polypropylène dans le récipient et en divisant le poids par le volume du récipient.

5. Particules électro-conductrices expansées de résine de polypropylène selon l'une quelconque des revendications 1 à 4, dans lesquelles les particules expansées ont deux pics de fusion en mesure par calorimétrie à balayage différentiel, et un rapport du pic de fusion à un côté haute température, {Qh/(QI + Qh)} x 100 calculé à partir d'une quantité de chaleur QI du pic de fusion à un côté basse température et d'une quantité de chaleur Qh du pic de fusion du côté haute température est de 8 % ou plus et inférieur à 25 %, où QI est la quantité de chaleur entourée par la courbe DSC du pic de basse température et une ligne tangente tracée à partir d'un point maximum entre le pic de basse température et le pic de haute température jusqu'à une ligne de base de début de fusion, et où la quantité de chaleur Qh est la quantité de chaleur entourée par la courbe DSC du pic de haute température et une ligne tangente tracée à partir d'un point maximum entre le pic de basse température et le pic de haute température jusqu'à une ligne de base de fin de fusion, et

où la courbe DSC est obtenue lorsque la température des particules électro-conductrices expansées de résine de polypropylène est augmentée avec un calorimètre à balayage différentiel à une vitesse d'augmentation de température de 10 °C/min de 40 °C à 220 °C.

6.  Article moulé électro-conducteur expansé dans le moule de résine de polypropylène produit à partir des particules électro-conductrices expansées de résine de polypropylène selon l'une quelconque des revendications 1 à 5, l'article moulé électro-conducteur expansé dans le moule de résine de polypropylène présentant une valeur de résistivité volumique de 10Ω•cm ou plus et 5,000Ω•cm ou moins, dans lequel la résistivité volumique d'un article moulé électro-conducteur expansé dans le moule de résine de polypropylène obtenu est déterminée conformément à la norme JIS K 7194-1994 en utilisant un résistivimètre.

7.  Article moulé électro-conducteur expansé dans le moule de résine de polypropylène selon la revendication 6, dans lequel l'article moulé passe le test d'inflammabilité UL94 HBF.

8.  Article moulé électro-conducteur expansé dans le moule de résine de polypropylène selon la revendication 6 ou 7, dans lequel l'article moulé présente une densité d'article moulé de 30 g/L ou plus et 45 g/L ou moins, dans lequel la densité de l'article moulé a été obtenue en découpant cinq éprouvettes présentant chacune une forme de parallélépipède rectangle d'une longueur de 150 mm, d'une largeur de 50 mm, et d'une épaisseur de 12 mm ont été découpés (sans la couche de peau) pour un test UL94 HBF, essentiellement à partir du centre, dans une direction d'épaisseur, de l'article moulé électro-conducteur expansé dans le moule de résine de polypropylène, en mesurant le poids, la longueur, la largeur et l'épaisseur de l'éprouvette découpée, en calculant le produit de la longueur, de la largeur et de l'épaisseur comme étant le volume de l'éprouvette, en divisant le poids par le volume et en prenant la moyenne de cinq éprouvettes comme étant la densité de l'article moulé (g/L).

9.  Article moulé électro-conducteur expansé dans le moule de résine de polypropylène selon l'une quelconque des revendications 6 à 8, dans lequel l'article moulé présente deux pics de fusion en mesure par calorimétrie à balayage différentiel, et un rapport du pic de fusion à un côté haute température, {qh/(ql + qh)} x 100, calculé à partir d'une quantité de chaleur ql du pic de fusion à un côté basse température et d'une quantité de chaleur qh du pic de fusion du côté de haute température, est de 8 % ou plus et inférieur à 25 %, ql est la quantité de chaleur entourée par la courbe DSC du pic de basse température et une ligne tangente tracée à partir d'un point maximum entre le pic de basse température et le pic de haute température jusqu'à une ligne de base de début de fusion et qh est la quantité de chaleur entourée par la courbe DSC du pic de haute température et une ligne tangente tracée à partir d'un point maximum entre le pic de basse température et le pic de haute température jusqu'à une ligne de base de fin de fusion, et où la courbe DSC est obtenue lorsque la température des particules électro-conductrices expansées de résine de polypropylène est augmentée avec un calorimètre à balayage différentiel à une vitesse d'augmentation de température de 10 °C/min de 40 °C à 220 °C.

10. Procédé de production de particules électro-conductrices expansées de résine de polypropylène, le procédé comprenant un procédé de moussage en une étape comprenant le placement de particules électro-conductrices de résine de polypropylène, d'eau et d'un agent moussant dans un récipient résistant à la pression, la dispersion du contenu dans le récipient résistant à la pression sous agitation et augmentation d'une température du contenu jusqu'à une température égale ou supérieure au point de ramollissement des particules électro-conductrices de résine de polypropylène, et puis le déchargement du liquide de dispersion dans le récipient résistant à la pression dans une zone ayant une pression inférieure à la pression interne du récipient résistant à la pression pour faire mousser les particules électro-conductrices de résine de polypropylène,
les particules électro-conductrices de résine de polypropylène comprenant une composition électro-conductrice de résine de polypropylène qui contient 11 parties en poids ou plus et 25 parties en poids ou moins d'un noir de carbone électro-conducteur par rapport à 100 parties en poids d'une résine de polypropylène et a un indice de fluidité de 0,5 g/ 10 min ou plus et 4,0 g/ 10 min ou moins où l'indice de fluidité est déterminé à une charge de 5000 g à 230 ± 0,2 °C,
où l'indice de fluidité est déterminé avec un appareil de mesure d'indice de fluidité décrit dans JIS K7210 : 1999, et où les particules électro-conductrices de résine de polypropylène contiennent, par rapport à 100 parties en poids de la résine de polypropylène, un agent d'agrandissement de taille de bulles en une quantité de 0,01 partie en poids ou plus et de 10 parties en poids ou moins.

11. Procédé de production de particules électro-conductrices expansées de résine de polypropylène selon la revendication 10, dans lequel l'agent moussant comprend un agent moussant physique inorganique incluant du dioxyde de carbone.

12. Procédé de production de particules électro-conductrices expansées de résine de polypropylène selon la revendication 10 ou 11, dans lequel l'agent d'agrandissement de taille de bulles est choisi parmi le polyéthylène glycol et la glycérine.

[Fig. 1]

[Fig. 2]

**REFERENCES CITED IN THE DESCRIPTION**

**Patent documents cited in the description**

- JP H07300536 A
- JP H09202837 A
- JP 2000169619 A
- JP 2004175819 A
- JP 2003229691 A
- JP 2004319603 A
- JP 2004263033 A
- JP 2010209145 A
- JP 2010270243 A
- JP H10251436 A
- JP 2005256007 A
- JP 2013117037 A
- JP 2013035949 A
- WO 2013022049 A